# EUROPEAN PATENT APPLICATION

(11) **EP 2 423 479 A2**
(43) Date of publication of application: **29.02.2012**
(21) Application number: 11178764.4
(22) Date of filing: 25.08.2011
(51) Int. Cl.: F01N 3/20, F01N 13/00

(54) **Exhaust gas purification apparatus**

(30) Priority: 27.08.2010 JP 2010190329
(71) Applicant: Kabushiki Kaisha Toyota Jidoshokki, 448-8671 Aichi Kariya-shi, Aichi-ken (JP); Toyota Jidosha Kabushiki Kaisha, Toyota-shi, Aichi 471-8571 (JP)
(72) Inventor: Kidokoro, Atsushi, Kariya-shi,, Aichi 448-8671 (JP); Hatta, Masanori, Kariya-shi,, Aichi 448-8671 (JP); Takahashi, Noriyoshi, Kariya-shi,, Aichi 448-8671 (JP); Itoh, Kazuhiro, Toyota-shi,, Aichi 471-8571 (JP)
(74) Representative: TBK

(57) **Abstract**

An adhesion preventing member 21 formed in a substantially circular-cylindrical shape is provided in an exhaust pipe 2. Urea water injected from an injection nozzle 6 is introduced into an inner peripheral side of the adhesion preventing member 21 through an opening portion 21a, and hence adhesion of the urea water to an inner peripheral surface 2a of the exhaust pipe 2 is inhibited. In the adhesion preventing member 21, there are provided five dispersion members 22 each having a plurality of through-holes 22a and urea water is dispersed in the exhaust pipe 2 by flowing through through-holes 22a. The adhesion preventing member 21 and the dispersion members 22 are arranged at a part spaced apart from the inner peripheral surface 2a of the exhaust pipe 2, that is, at a part which is heated to high temperature in the exhaust pipe 2.

## Description

### BACKGROUND OF THE INVENTION

### Field of the Invention

The present invention relates to an exhaust gas purification apparatus, and more particularly, to a structure for purifying nitrogen oxides contained in the exhaust gas of a diesel engine.

### Description of the Related Art

As an example of an exhaust gas purification apparatus for purifying nitrogen oxides (NOₓ) contained in the exhaust gas of a diesel engine, there is a urea selective catalytic reduction system (urea SCR system). For example, as described in Japanese Patent Application Laid-open No. 2003-301737, the urea SCR system comprises an SCR catalyst provided in an exhaust pipe and a urea-water addition device for injecting urea water into the exhaust pipe on an upstream side of the SCR catalyst. The SCR catalyst uses ammonia (NH₃), generated from urea water added to the exhaust gas, as a reducing agent so as to react NOₓ contained in the exhaust gas, and NOₓ is reduced to harmless nitrogen (N₂) and water (H₂O).

In general, in the urea SCR system as described in Japanese Patent Application Laid-open No. 2003-301737, ammonia is generated by the hydrolysis of the urea water through the use of heat of the exhaust gas. Here, for example, immediately after start-up of an engine, the temperature of the exhaust pipe is lower than the temperature of the exhaust gas because the outer peripheral surface thereof is cooled by the outside air. In such a state, when the urea water injected from the urea-water addition device adheres to an inner peripheral surface of the exhaust pipe, the hydrolysis does not occur. As a result, because the moisture in the urea water is vaporized and urea remains, the residual urea may be deposited on the inner peripheral surface of the exhaust pipe. In such a case, the deposited urea does not reach the SCR catalyst. Therefore, original required amount of ammonia is not supplied to the SCR catalyst, and hence it is necessary to increase the amount of urea water added.

Meanwhile, when the temperature of the exhaust pipe becomes higher after elapse of a predetermined time period from the start-up of the engine, ammonia is generated from urea deposited on the inner peripheral surface of the exhaust pipe by the heat of the exhaust pipe. Because a large part of the ammonia thus generated becomes surplus, the ammonia passes through the SCR catalyst without being reacted, and so-called ammonia slip occurs. That is, the urea SCR system described in Japanese Patent Application Laid-open No. 2003-301737 has difficulty in efficiently using the urea water added to the exhaust gas.

### SUMMARY OF THE INVENTION

The present invention has been made to solve such problems, and it is therefore an object of the present invention to provide an exhaust gas purification apparatus in which urea water injected into an exhaust pipe is used with improved efficiency.

An exhaust gas purification apparatus according to the present invention comprises: an exhaust pipe in which an exhaust gas from an internal combustion engine flows; urea-water addition means for injecting urea water into the exhaust pipe; and a reduction catalyst for purifying nitrogen oxides contained in the exhaust gas by using ammonia generated from the urea water as a reducing agent, in which the exhaust pipe comprises therein at least one of: a plate-like adhesion preventing member extending along a flow direction of the exhaust gas; and a plate-like dispersion member extending along the flow direction of the exhaust gas and provided with a plurality of through-holes through which the urea water injected from the urea-water addition means is flowable, and in which the adhesion preventing member and the dispersion member are arranged at a part that faces the urea-water addition means and is heated to high temperature in the exhaust pipe.

### BRIEF DESCRIPTION OF THE DRAWINGS

In the accompanying drawings:
FIG. 1 is a schematic view of a structure of an exhaust gas purification apparatus according to a first embodiment of the present invention;
FIG. 2 is a schematic sectional side view of the structure of the exhaust gas purification apparatus according to the first embodiment;
FIG. 3 is a sectional view taken along III-III of FIG. 2;
FIG. 4 is a schematic sectional side view of a structure of an exhaust gas purification apparatus according to a second embodiment of the present invention;
FIG. 5 is a schematic sectional side view of a structure of an exhaust gas purification apparatus according to a third embodiment of the present invention; and
FIG. 6 is a schematic sectional side view of a structure of an exhaust gas purification apparatus according to a fourth embodiment of the present invention.

### DETAILED DESCRIPTION OF THE PREFERRED EMBODIMENTS

In the following, description is made of embodiments of the present invention with reference to the accompanying drawings.

### First embodiment

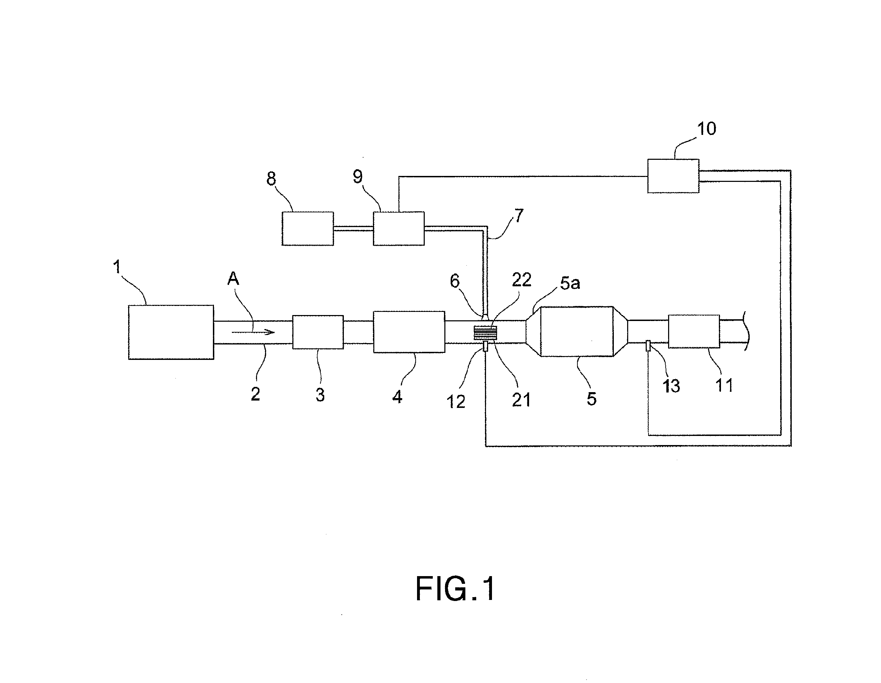

FIG. 1 is a schematic view of a structure of a diesel engine provided with an exhaust gas purification apparatus according to the first embodiment. An exhaust pipe 2 is connected to a diesel engine 1 as an internal combustion engine. An exhaust gas discharged from the diesel engine 1 into the exhaust pipe 2 flows in a direction indicated by an arrow A, that is, from the side of the diesel engine 1 as an upstream side. Midway in the exhaust pipe 2, there is provided an oxidation catalyst 3 for oxidizing carbon monoxide (CO), hydrocarbons (HC) and the like contained in the exhaust gas. On a downstream side of the oxidation catalyst 3, there is provided a filter 4 for collecting particulate matter (PM) contained in the exhaust gas. Further, on a downstream side of the filter 4, there is provided an SCR catalyst 5 as a reduction catalyst for purifying nitrogen oxides (NOₓ) contained in the exhaust gas.

The SCR catalyst 5 is a catalyst for purifying NOₓ by using ammonia (NH₃), generated from urea water added to the exhaust gas, as a reducing agent. Between the filter 4 and the SCR catalyst 5, there is provided an injection nozzle 6 as a urea-water addition means for injecting the urea water into the exhaust pipe 2. A urea-water tank 8 is connected to the injection nozzle 6 through intermediation of a connecting pipe 7, and the urea water is stored in the urea-water tank 8. Further, midway in the connecting pipe 7, there is provided a urea-water supply system 9 for supplying the urea water in the urea-water tank 8 to the injection nozzle 6. The urea-water supply system 9 is electrically connected to an ECU 10 for controlling operations of the diesel engine 1 and the exhaust gas purification apparatus. In response to signals output from the ECU 10 to the urea-water supply system 9, the amount and timing of urea water injection from the injection nozzle 6 are controlled.

On a downstream side of the SCR catalyst 5, there is provided a slip catalyst 11 for removing unreacted ammonia which passes through the SCR catalyst 5, for example, when an excess amount of ammonia relative to an amount of NOₓ contained in the exhaust gas is generated. A muffler (not shown) is connected to a downstream side of the slip catalyst 11, and the exhaust gas which passes through the slip catalyst 11 is discharged into the air after exhaust noise is reduced in the muffler. Further, on an upstream side and the downstream side of the SCR catalyst 5, there are provided an upstream NOₓ sensor 12 and a downstream NOₓ sensor 13 respectively. The upstream NOₓ sensor 12 and the downstream NOₓ sensor 13 are sensors for detecting the concentration of NOₓ contained in the exhaust gas, and are electrically connected to the ECU 10. The ECU 10 controls the amount of urea water injection from the injection nozzle 6 based on the amount of NOₓ detected by these NOₓ sensors.

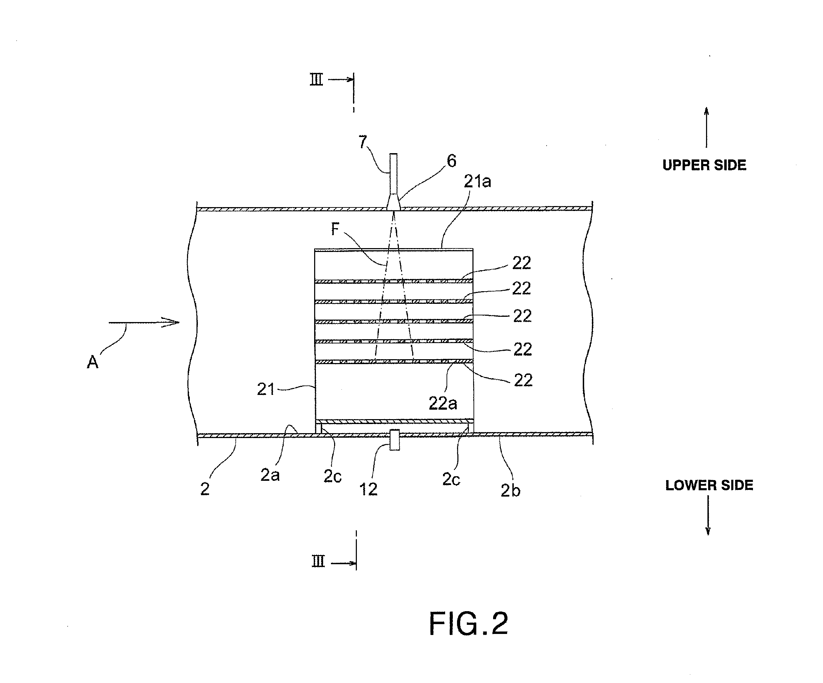

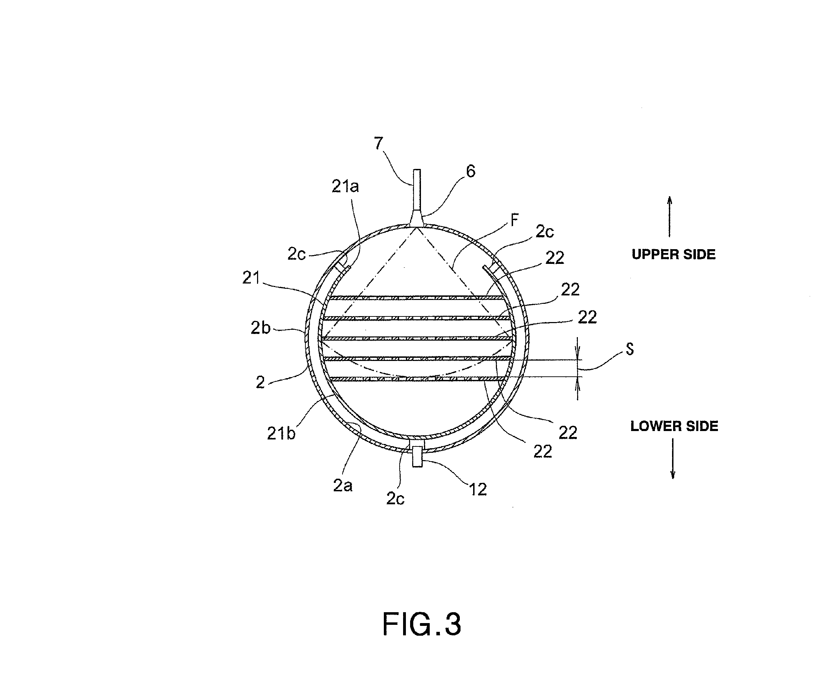

Here, detailed description is made of the structure around the injection nozzle 6 with reference to FIGS. 2 and 3. Note that, for the sake of convenience in description, upper and lower directions in the exhaust gas purification apparatus are defined by arrows illustrated in FIGS. 2 and 3. As illustrated in FIG. 2, the injection nozzle 6 injects urea water F, indicated by dashed lines, downwardly in a direction substantially perpendicular to the exhaust gas flow direction indicated by the arrow A. In the exhaust pipe 2, at a part facing the injection nozzle 6, that is, at a part to which the urea water F is injected from the injection nozzle 6, there is provided an adhesion preventing member 21 which is a substantially circular-cylindrical member extending along the exhaust gas flow direction, and five dispersion members 22 which are flat-plate like members extending along the exhaust gas flow direction.

As illustrated in FIG. 3, the adhesion preventing member 21 is formed into the substantially circular-cylindrical shape by curving a plate-like member along an inner peripheral surface 2a of the exhaust pipe 2, and has an opening portion 21a, which extends along an axial direction, on a side facing the injection nozzle 6. The urea water F injected from the injection nozzle 6 is introduced into an inner peripheral side of the adhesion preventing member 21 through the opening portion 21a, and therefore inhibits the urea water F from adhering to the inner peripheral surface 2a of the exhaust pipe 2. Here, the opening portion 21a constitutes a urea-water introducing portion of the adhesion preventing member 21. Note that, the injection nozzle 6 injects the urea water F into a fan shape substantially flat in a direction perpendicular to the exhaust-gas flow direction indicated by the arrow A. Thus, in comparison with a case where the same amount of urea water is conically injected, more urea water is dispersed in a narrower range, and hence the urea water can be efficiently added to the exhaust gas.

The adhesion preventing member 21 is formed to have an outer diameter smaller than an inner diameter of the exhaust pipe 2, and is arranged so that an outer peripheral surface 21b of the adhesion preventing member 21 is spaced apart from the inner peripheral surface 2a of the exhaust pipe 2. Thus, when flowing through the inside of the exhaust pipe 2, the exhaust gas passes through an outer peripheral side and an inner peripheral side of the adhesion preventing member 21. Here, although the exhaust pipe 2 is heated by the exhaust gas flowing therein, an outer peripheral surface 2b of the exhaust pipe 2 is cooled by the outside air. Thus, for example, immediately after start-up of the diesel engine 1 (refer to FIG. 1), the temperature of the exhaust pipe 2 is lower than the temperature of the exhaust gas. The adhesion preventing member 21 is arranged at a part which is heated to high temperature in the exhaust pipe 2, that is, at a part spaced apart from the inner peripheral surface 2a of the exhaust pipe 2. Thus, the adhesion preventing member 21 is rapidly heated by the exhaust gas passing through the outer peripheral side and the inner peripheral side thereof without being influenced by the temperature of the exhaust pipe 2. Further, the adhesion preventing member 21 is shorter than the exhaust pipe 2 in the exhaust gas flow direction, and hence smaller in heat capacity. Thus, the adhesion preventing member 21 is more easily heated by the exhaust gas. Note that, a plurality of protruding portions 2c project from the inner peripheral surface 2a of the exhaust pipe 2, and the adhesion preventing member 21 is retained in the exhaust pipe 2 through fixation of both end portions thereof in the axial direction with respect to the protruding portions 2c by welding or the like.

The five dispersion members 22 are flat-plate like members arrayed along the upper and lower directions in the adhesion preventing member 21, and are arranged so as to be perpendicular to the upper and lower directions and so that clearances S are formed between the dispersion members 22 adjacent to each other. As described above, the adhesion preventing member 21 is arranged at the part which is heated to high temperature in the exhaust pipe 2, that is, at the part spaced apart from the inner peripheral surface 2a of the exhaust pipe 2. Thus, the dispersion members 22 provided in the adhesion preventing member 21 are also arranged at the part which is heated to high temperature in the exhaust pipe 2. Further, this part is near the center of the exhaust pipe 2, and hence the temperature at this part becomes higher. Thus, each of the dispersion members 22 is rapidly heated by the exhaust gas passing through upper surface sides and lower surface sides thereof without being influenced by the temperature of the exhaust pipe 2. Further, each of the dispersion members 22 has a plurality of through-holes 22a which pass therethrough in the upper and lower directions. A part of the urea water F, which reaches the upper surface side of a dispersion member 22, is blocked by colliding against the dispersion member 22, and a residual part of the urea water F flows through the through-holes 22a. Thus, when the amount of urea water F which passes through the through-holes 22a is reduced, for example, by 20% with respect to each dispersion member 22, the urea water F is dispersed in the exhaust pipe 2, and hence the urea water can be uniformly added to the exhaust gas.

Further, the upstream NOₓ sensor 12 on the upstream side of the SCR catalyst 5 is provided at a part corresponding to the outer peripheral side of the adhesion preventing member 21, and is separated from the injection nozzle 6 by the adhesion preventing member 21. That is, the adhesion preventing member 21 inhibits adhesion of the urea water F injected from the injection nozzle 6 to the upstream NOₓ sensor 12. Here, in general, NOₓ sensors for detecting the concentration of NOₓ contained in the exhaust gas include fine ceramics such as zirconia as a material thereof. Further, the NOₓ sensor is exposed to the exhaust gas flowing in the exhaust pipe 2, and hence operates under high temperatures, for example, of from 600° C to 1,000° C. If the urea water adheres to the NOₓ sensor operated under such high temperatures, so-called thermal shock, where abrupt temperature change occurs, is applied, and hence breakage such as cracking may occur.

In order to prevent such breakage, a NOₓ sensor is normally provided a predetermined distance upstream of the injection nozzle 6 so as to prevent adhesion of the urea water F. However, the upstream NOₓ sensor 12 of the present invention is separated from the injection nozzle 6 by the adhesion preventing member 21, and hence does not suffer breakage owing to adhesion of the urea water F. Thus, the upstream NOₓ sensor 12 can be arranged near the injection nozzle 6. As a result, the distance between the filter 4 and the SCR catalyst 5 (refer to FIG. 1) can be reduced for the purpose of downsizing the apparatus. Further, decreases in exhaust gas temperature before the exhaust gas reaches the SCR catalyst 5 can be inhibited, and hence NOₓ can be efficiently purified by the SCR catalyst 5.

Next, description is made of operation of the exhaust gas purification apparatus according to the first embodiment of the present invention.

As illustrated in FIG. 1, when the operation of the diesel engine 1 is started, the exhaust gas discharged into the exhaust pipe 2 flows in the direction indicated by the arrow A, and sequentially passes through the oxidation catalyst 3 and the filter 4. Carbon monoxide (CO), hydrocarbons (HC) and the like contained in the exhaust gas are oxidized while passing through the oxidation catalyst 3, and the particulate matter contained in the exhaust gas is removed while passing through the filter 4. Further, when the operation of the diesel engine 1 is started, the ECU 10 outputs signals to the urea-water supply system 9 so as to start injection of the urea water by the injection nozzle 6, and urea water is added to the exhaust gas passing through the filter 4. The urea water thus added is subjected to hydrolysis by the heat of the exhaust gas, with the result that ammonia is generated.

Here, as illustrated in FIG. 2, the substantially circular-cylindrical adhesion preventing member 21 and the five dispersion members 22 are provided at the part facing the injection nozzle 6, and the urea water F injected from the injection nozzle 6 is introduced into the inner peripheral side of the adhesion preventing member 21 through the opening portion 21a of the adhesion preventing member 21. Thus, in this state, the adhesion preventing member 21 inhibits adhesion of the urea water F to the inner peripheral surface 2a of the exhaust pipe 2. Further, the adhesion preventing member 21 is arranged at the part where the outer peripheral surface 21b thereof is spaced apart from the inner peripheral surface 2a of the exhaust pipe 2, that is, at the part which is heated to high temperature in the exhaust pipe 2. Thus, the adhesion preventing member 21 is heated by the exhaust gas without being influenced by the temperature of the exhaust pipe 2. Therefore, even if the temperature of the exhaust pipe 2 is lower than the temperature of the exhaust gas such as immediately after the start-up of the diesel engine 1, hydrolysis of the urea water adhering to the adhesion preventing member 21 is not hindered. Thus, ammonia is generated from a large part of the urea water added to the exhaust gas.

Further, the dispersion members 22 provided in the adhesion preventing member 21 each block a part of the injected urea water F, and the residual parts thereof flow through to the lower dispersion member 22. That is, the urea water F is uniformly dispersed by the dispersion members 22 in the exhaust pipe 2, and hence ammonia generated from the urea water F is uniformly supplied to the SCR catalyst 5 (refer to FIG. 1). Note that, the dispersion members 22 are provided in the adhesion preventing member 21, and heated by the exhaust gas as well as the adhesion preventing member 21. Thus, the hydrolysis of the urea water adhering to the dispersion members 22 is not hindered, and ammonia is generated from a large part of the urea water. Therefore, the moisture of the urea water adhering to the adhesion preventing member 21 and the dispersion members 22 does not evaporate and urea does not remain. As a result, efficiency in the use of the urea water F injected by the injection nozzle 6 is improved.

When ammonia generated from the urea water F is supplied as described above, the SCR catalyst 5 uses ammonia as a reducing agent so as to reduce NOₓ contained in the exhaust gas to harmless nitrogen (N₂) and water (H₂O). If the exhaust gas passing through the SCR catalyst 5 contains surplus ammonia, ammonia is removed by the slip catalyst 11. The exhaust gas passing through the slip catalyst 11 is, after noise is reduced in the muffler (not shown), discharged into the air. Further, the upstream NOₓ sensor 12 and the downstream NOₓ sensor always detect the concentration of NOₓ on the upstream side and the downstream side of the SCR catalyst 5 respectively. The ECU 10 controls the amount of injection of the urea water F from the injection nozzle 6 based on the concentration of NOₓ detected by these NOₓ sensors.

As described above, because the adhesion preventing member 21 and the dispersion members 22 are provided at the part facing the injection nozzle 6, adhesion of the urea water F to the inner peripheral surface of the exhaust pipe 2 is inhibited. The adhesion preventing member 21 and the dispersion members 22 are arranged at the part which is heated to high temperature in the exhaust pipe 2, that is, at the part spaced apart from the inner peripheral surface 2a of the exhaust pipe 2, and hence ammonia is not hindered from being generated from the urea water adhering to these members. That is, an amount of urea deposited in the exhaust pipe 2 is reduced, and a large part of the injected urea water is used for purification of NOₓ. Further, the adhesion preventing member 21 and the dispersion members 22 are members extending parallel to the exhaust gas flow direction, and hence NOₓ can be purified without an increase in pressure loss of the exhaust gas. Thus, efficiency in the use of urea water can be improved in an exhaust gas purification apparatus in which the urea water is injected into the exhaust pipe 2.

Further, the adhesion preventing member 21 is formed into a substantially circular-cylindrical shape having the opening portion 21a so that the urea water F is introduced into the inner peripheral side of the adhesion preventing member 21 through the opening portion 21a. Thus, the adhesion of the urea water to the inner peripheral surface 2a of the exhaust pipe 2 can be further inhibited.

Still further, the injection nozzle 6 injects the urea water into a fan shape substantially flat in the direction substantially perpendicular to the exhaust gas flow direction. Thus, the urea water can be efficiently added to the exhaust gas flowing in the exhaust pipe 2. Further, the apparatus can be downsized in the exhaust gas flow direction.

The upstream NOₓ sensor 12 is arranged at the part separated from the injection nozzle 6 by the adhesion preventing member 21, and hence the upstream NOₓ sensor 12 can be arranged near the injection nozzle 6. As a result, the exhaust pipe 2 on the upstream side of the SCR catalyst 5 is shortened, and the entire apparatus is downsized. Thus, mountability to vehicles is enhanced, and the amount of decrease of the exhaust gas temperature before the exhaust gas reaches the SCR catalyst 5 can be inhibited, and hence NOₓ can be purified with improved efficiency by the SCR catalyst 5.

Further, the exhaust gas purification apparatus is provided with the adhesion preventing member 21 and the plurality of dispersion members 22. Thus, the urea water is dispersed by the dispersion members 22; and adhesion of the urea water to the exhaust pipe 2 is inhibited by the adhesion preventing member. Therefore, ammonia is generated with improved efficiency, and efficiency in the use of the urea water is further improved.

Still further, the dispersion members 22 are retained by the adhesion preventing member 21. Thus, in comparison with a structure in which the dispersion members 22 are retained directly on the inner peripheral surface 2a of the exhaust pipe 2, the dispersion members 22 are less liable to be influenced by the temperature of the exhaust pipe 2, and more easily heated by the exhaust gas.

### Second embodiment

Next, description is made of the exhaust gas purification apparatus according to a second embodiment of the present invention.

While the exhaust gas purification apparatus according to the first embodiment includes the substantially circular-cylindrical adhesion preventing member and the flat-plate like dispersion members, the exhaust gas purification apparatus according to the second embodiment includes only a flat-plate like adhesion preventing member. Note that, in the embodiments described below, the same or similar components are denoted by the same reference symbols as those in FIGS. 1 to 4, and hence detailed description thereof is omitted.

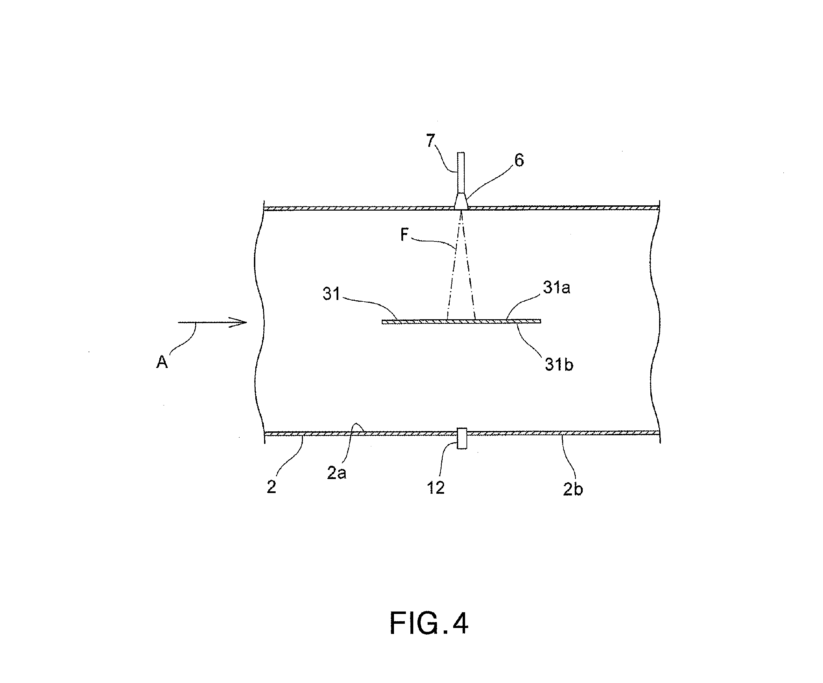

As illustrated in FIG. 4, in the exhaust pipe 2, there is provided a flat-plate like adhesion preventing member 31 extending along the exhaust gas flow direction, which is fixed to the inner peripheral surface 2a of the exhaust pipe 2 by welding or the like. The adhesion preventing member 31 is arranged at a part facing the injection nozzle 6 in the exhaust pipe 2, that is, at a part to which the urea water F is injected from the injection nozzle 6 so as to pass through the central portion of the exhaust pipe 2. Thus, the urea water F injected from the injection nozzle 6 collides against the adhesion preventing member 31. Further, an upper surface 31a and a lower surface 31b of the adhesion preventing member 31 are spaced apart from the inner peripheral surface 2a of the exhaust pipe 2, and hence the adhesion preventing member 31 is arranged at a part which is heated to high temperature in the exhaust pipe 2. Other structural details are similar to those in the first embodiment.

As described above, even when only the flat-plate like adhesion preventing member 31 is used, the urea water F is inhibited from adhering to the inner peripheral surface 2a of the exhaust pipe 2. Thus, similarly to the first embodiment, urea can be inhibited from being deposited on the inner peripheral surface 2a of the exhaust pipe 2.

### Third embodiment

Next, description is made of an exhaust gas purification apparatus according to a third embodiment of the present invention.

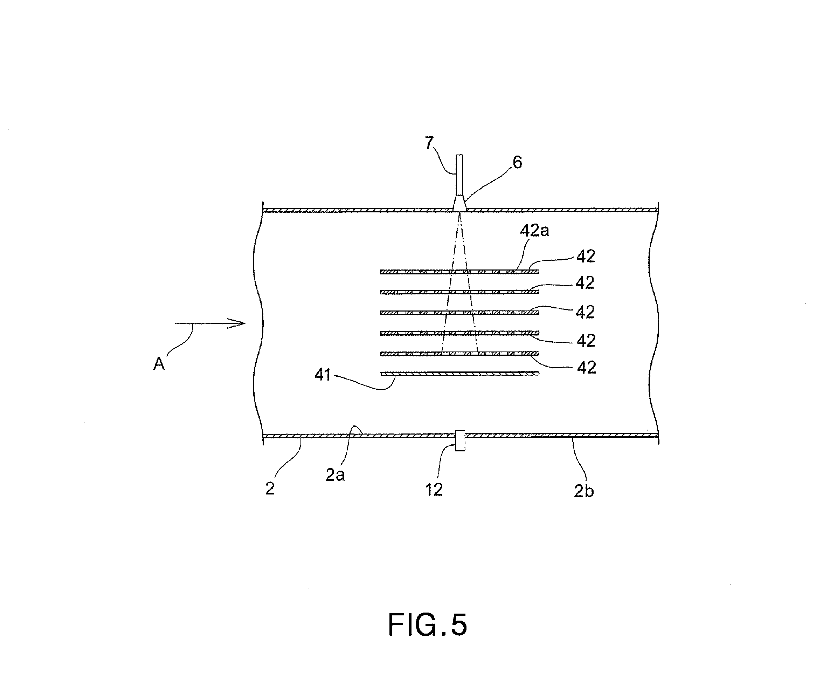

Unlike the exhaust gas purification apparatus according to the second embodiment, the exhaust gas purification apparatus according to the third embodiment further includes the flat-plate like dispersion members in the first embodiment. As illustrated in FIG. 5, at the part facing the injection nozzle 6 in the exhaust pipe 2, there are provided an adhesion preventing member 41 and five dispersion members 42, each of which is a flat-plate like member. Each of the dispersion members 42 has a plurality of through-holes 42a similar to the through-holes 22a of the dispersion members 22 in the first embodiment, and allows the urea water F injected from the injection nozzle 6 to sequentially pass through from an upper side to a lower side. Further, the adhesion preventing member 41 is provided below the dispersion members 42 so as to inhibit the urea water F, which passes through the lowermost dispersion member 42, from adhering to the inner peripheral surface 2a of the exhaust pipe 2. Other structural details are similar to those in the first embodiment.

As described above, even when the adhesion preventing member 41 and the dispersion members 42, each of which has a flat-plate like shape, are used, similarly to the first embodiment, the urea water F is inhibited from adhering to the inner peripheral surface 2a of the exhaust pipe 2, and the dispersion members 42 disperse the urea water F. Thus, efficiency in the use of the urea water can be improved.

### Fourth embodiment

Next, description is made of an exhaust gas purification apparatus according to a fourth embodiment of the present invention.

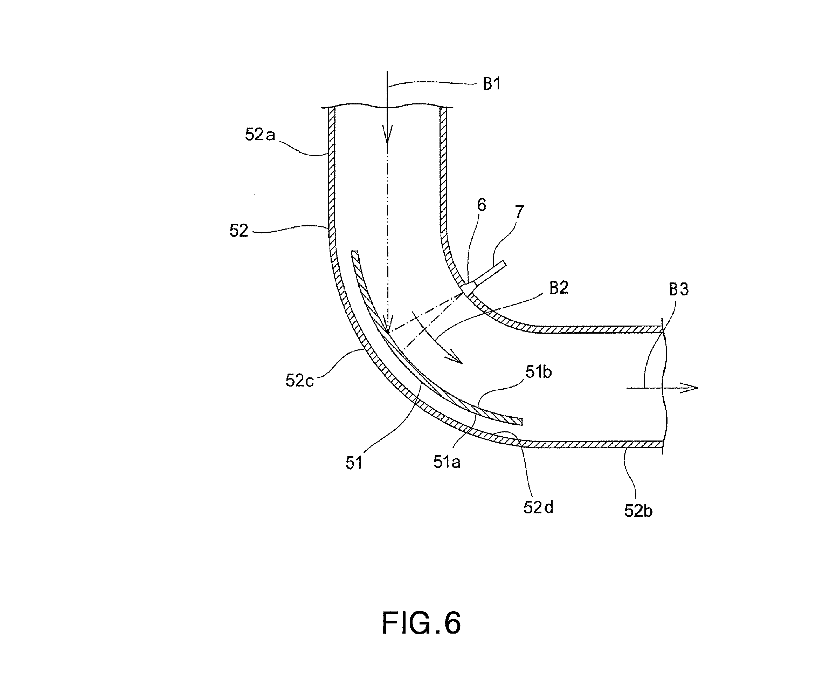

While the adhesion preventing member in the exhaust gas purification apparatus according to the first embodiment is arranged in a linear exhaust pipe 2, the adhesion preventing member in the exhaust gas purification apparatus according to the fourth embodiment is arranged in an exhaust pipe having a bent portion as described below. As illustrated in FIG. 6, an exhaust pipe 52 of the exhaust gas purification apparatus according to the fourth embodiment includes an upstream straight portion 52a connected to the filter 4 in the first embodiment (refer to FIG. 1), and a downstream straight portion 52b connected to the SCR catalyst 5 (refer to FIG. 1). The upstream straight portion 52a and the downstream straight portion 52b are connected to each other through intermediation of a bent portion 52c. Thus, in the exhaust pipe 52, an exhaust gas flowing straight in the upstream straight portion 52a as indicated by an arrow B1 is turned at the bent portion 52c as indicated by an arrow B2, and then flows straight in the downstream straight portion in a direction indicated by an arrow B3.

In the exhaust pipe 52 structured as described above, at a part positioned on an extension of the direction indicated by the arrow B1, that is, at a part positioned on an extension of a flow line of the exhaust gas flowing in the upstream straight portion 52a, there is provided a plate-like adhesion preventing member 51 bent with the same curvature as that of the bent portion 52c. Further, at an inner peripheral side of the bent portion 52c, the injection nozzle 6 is provided at a part facing the adhesion preventing member 51 so that the urea water F injected from the injection nozzle 6 collides against the adhesion preventing member 51. Here, the adhesion preventing member 51 is provided so as to be spaced apart from an inner peripheral surface 52d of the exhaust pipe 52. Thus, when the exhaust gas flows in the bent portion 52c of the exhaust pipe 52, it flows through the side of a front surface 51a and the side of a rear surface 51b of the adhesion preventing member 51.

Further, a part on an outer peripheral side of the bent portion 52c of the exhaust pipe 52, that is, a part provided with the adhesion preventing member 51, is a part against which the exhaust gas flowing in the upstream straight portion 52a of the exhaust pipe 52 collides. Thus, in the exhaust pipe 52, this part is a part which is heated to high temperature by the exhaust gas. Therefore, the adhesion preventing member 51 is heated by the exhaust gas. As a result, the adhesion preventing member 51 inhibits adhesion of the urea water injected from the injection nozzle 6 to the inner peripheral surface 52d of the exhaust pipe 52. Further, because the adhesion preventing member 51 is heated by the exhaust gas, ammonia is generated without hindrance of hydrolysis.

As described above, in the bent portion 52c of the exhaust pipe 52, the part positioned on the extension of the flow line of the exhaust gas flowing in the upstream straight portion 52a is also heated to high temperature. Thus, even when the adhesion preventing member 51 is arranged at such a part, efficiency in the use of the urea water can be improved.

In the first embodiment, although the adhesion preventing member is formed of a substantially circular-cylindrical member, the shape of the adhesion preventing member is not limited thereto. As long as the adhesion preventing member is capable of inhibiting the urea water injected from the injection nozzle from adhering to the inner peripheral surface of the exhaust pipe, other shapes such as a cylindrical member having a polygonal cross-section may be employed. Further, in the first embodiment, the opening portion extending along the axial direction of the adhesion preventing member constitutes the urea-water introducing portion. Alternatively, for example, the adhesion preventing member may be formed of a member having a perfect circular-cylindrical shape, and, such as a rectangular or circular hole may be formed at the part facing the injection nozzle so as to be used as the urea-water introducing portion.

In the third embodiment, although the injection nozzle, the adhesion preventing member, the dispersion members and the NOₓ sensor are provided in the exhaust pipe, the arrangement position of those components is not limited thereto. For example, as illustrated in FIG. 1, the SCR catalyst 5 generally includes a hollow tapered cone 5a connected to the exhaust pipe 2, and the injection nozzle, the adhesionpreventingmember, thedispersionmembers, and the NOₓ sensor may be provided to the cone 5a.

Further, in the above-mentioned embodiments, although the ECU 10 controls the amount of urea water injected from the injection nozzle 6 based on the amount of NOₓ detected by the NO_{X} sensors 12 and 13, the ECU 10 may control the urea water addition amount based on the concentration of NOₓ estimated from engine conditions.

Still further, although each of the dispersion members 22 in the first embodiment and the adhesion preventing members and the dispersion members in the second and third embodiments has a flat surface shape, a cylindrical shape or a corrugated shape may also be employed.

An adhesion preventing member 21 formed in a substantially circular-cylindrical shape is provided in an exhaust pipe 2. Urea water injected from an injection nozzle 6 is introduced into an inner peripheral side of the adhesion preventing member 21 through an opening portion 21a, and hence adhesion of the urea water to an inner peripheral surface 2a of the exhaust pipe 2 is inhibited. In the adhesion preventing member 21, there are provided five dispersion members 22 each having a plurality of through-holes 22a and urea water is dispersed in the exhaust pipe 2 by flowing through through-holes 22a. The adhesion preventing member 21 and the dispersion members 22 are arranged at a part spaced apart from the inner peripheral surface 2a of the exhaust pipe 2, that is, at a part which is heated to high temperature in the exhaust pipe 2.

## Claims

1. An exhaust gas purification apparatus, comprising:
an exhaust pipe (2, 52) in which an exhaust gas discharged from an internal combustion engine (1) flows;
urea-water addition means (6) for injecting urea water into the exhaust pipe (2, 52); and
a reduction catalyst (5) for purifying nitrogen oxides contained in the exhaust gas by using ammonia generated from the urea water as a reducing agent,
wherein the exhaust pipe (2, 52) comprises therein at least one of:
a plate-like adhesion preventing member (21, 31, 41, 51) extending along a flow direction of the exhaust gas; and
a plate-like dispersion member (22, 42) extending along the flow direction of the exhaust gas and provided with a plurality of through-holes (22a, 42a) through which the urea water injected from the urea-water addition means (6) is flowable, and
wherein the adhesion preventing member (21, 31, 41, 51) and the dispersion member (22, 42) are arranged at a part that faces the urea-water addition means (6) and is heated to high temperature in the exhaust pipe (2, 52).

2. An exhaust gas purification apparatus according to claim 1, comprising the adhesion preventing member (21),
wherein the adhesion preventing member (21) is formed of a substantially cylindrical member, and includes a urea-water introducing portion (21a) for introducing the urea water injected from the urea-water addition means (6) into an inner peripheral side of the adhesion preventing member (21).

3. An exhaust gas purification apparatus according to claims 1 or 2, wherein the urea-water addition means (6) injects the urea water into a fan shape substantially flat in a direction substantially perpendicular to the flow direction of the exhaust gas.

4. An exhaust gas purification apparatus according to any of claims 1 to 3, further comprising a NOₓ sensor (12) for detecting concentration of the nitrogen oxides contained in the exhaust gas on an upstream side of the reduction catalyst (5),
wherein the NOₓ sensor (12) is arranged at a part separated from the urea-water addition means (6) by the adhesion preventing member (21, 31, 41).

5. An exhaust gas purification apparatus according to any of claims 1 to 4, comprising both of the adhesion preventing member (21, 41) and the dispersion member (22, 42), wherein the dispersion member (22, 42) is arranged between the urea-water addition means (6) and the adhesion preventing member (21, 41).

6. An exhaust gas purification apparatus according to any of claims 1 to 5, comprising a plurality of the dispersion members (22, 42).
